Europäisches Patentamt

European Patent Office

Office européen des brevets

(19)

(11) EP 0 577 694 B1

(12) EUROPEAN PATENT SPECIFICATION

(45) Date of publication and mention
of the grant of the patent:
19.05.1999 Bulletin 1999/20

(21) Application number: 92907913.5

(22) Date of filing: 27.03.1992

(51) Int Cl.⁶: **G06F 15/80**

(86) International application number:
**PCT/AU92/00133**

(87) International publication number:
**WO 92/17855 (15.10.1992 Gazette 1992/26)**

(54) **A NEURAL NETWORK AND TRAINING METHOD**

NEURONALES NETZWERK UND LERNMETHODE

RESEAU NEURONAL ET METHODE D'APPRENTISSAGE

(84) Designated Contracting States:
**DE GB**

(30) Priority: **28.03.1991 AU 5355/91**

(43) Date of publication of application:
**12.01.1994 Bulletin 1994/02**

(73) Proprietor: **THE UNIVERSITY OF SYDNEY**
**Sydney, New South Wales 2006 (AU)**

(72) Inventors:
 • **JABRI, Marwan**
   **Hunters Hill, NSW 2110 (AU)**
 • **FLOWER, Barry, Glen**
   **Naremburn, NSW 2065 (AU)**

(74) Representative: **Milhench, Howard Leslie et al**
**R.G.C. Jenkins & Co.**
**26 Caxton Street**
**London SW1H 0RJ (GB)**

(56) References cited:
**EP-A- 0 385 637**          **EP-A- 0 432 008**
**US-A- 4 912 647**          **US-A- 5 075 868**
**US-A- 5 083 285**

 • **IEEE TRANSACTIONS ON NEURAL NETWORKS**
   **vol. 1, no. 1 , March 1990 , NEW YORK US pages**
   **58 - 70 DEMBO 'Model-free distributed learning'**

## Description

TECHNICAL FIELD

This invention concerns a neural network and a method of training a neural network.

A neural network can in general be considered to be a type of computer with architecture inspired by the neuron and synapse structure of the brain. Such a computer is capable of being trained to make decisions. For instance, the computer can be trained by "showing" it a series of classified patterns. Once trained the computer will be able when confronted by a pattern to decide which class it belongs to.

Neural networks are made up of neurons connected to each other by synapses. The network may be layered, in which case only the input and output layers are visible to the outside world, and intermediate layers are "hidden".

The function of the synapses (also referred to as weights) is to amplify the signals passing through them, from one neuron to another, by a strength factor.

The function of the neurons is to produce a non-linear (squashed) value of the sum of the amplified signals received from other neurons.

"Training" (also referred to as teaching) a network involves finding a set of strength factor values for the synapses to enable the network to produce the correct output patterns from given input pattern.

BACKGROUND ART

Many researchers have recently proposed architectures for very large scale integration (VLSI) implementation of a type of neural network called a multi-layer perceptron in which the "training" is performed on-chip. A technique known as "back-propagation" has been proposed for use in respect of digital and analogue implementations to train the network.

Back-propagation is a "supervised" training technique. This means that to train a network to recognise an input pattern, the "expected" output of the network associated with the input pattern needs to be known.

Back-propagation trains a network by calculating modifications in the strength factors of individual synapses in order to minimise the value of: half of the sum of the square of the differences between the network output and the "expected" output (the total mean squared error or TMSE). The minimisation process is performed using the gradient of the TMSE with respect to the strength factor being modified (gradient descent). Although the gradient with respect to the strength factors in the output layer (synapses connected to the output neurons) can be easily calculated, the gradient with respect to strength factors in the hidden layers is more difficult to evaluate. Back-propagation offers an analytical technique that basically propagates the error backward through the network from the output in order to evaluate the gradient, and therefore to calculate the required strength factor modifications.

Analog implementation of back propagation requires bi-directional synapses, which are expensive, and the generation of the derivative of neuron transfer functions with respect to their input, which is difficult.

The Madaline Rule III has been suggested as a less expensive alternative to back-propagation for analog implementation. This rule evaluates the required derivatives using "node perturbation". This means that each neuron is perturbated by an amount $\Delta net_i$ which produces a corresponding change in the TMSE. The change in value of the required strength factor $\Delta w_{ij}$ is estimated by the following equation:

$$\Delta w_{ij} = -\eta \, \frac{\Delta E}{\Delta net_i} x_j$$

where

$\Delta E = E_{pert} - E$, i.e. the difference between the mean squared errors produced at the output of the network for a given pair of input and training signals when a node is perturbated $(E_{pert})$ and when it is not (E);

$$net_i = \Sigma_j w_{ij} x_j;$$

$x_j = f(net_j)$ where $f$ is the non-linear squashing function; and
$\eta$ is a constant.

In addition to the hardware needed for the operation of the network, the implementation of the Madaline Rule III training for a neural network having N neurons in analog VLSI requires: an addressing module and wires routed to select and deliver the perturbations to each of the N neurons; multiplication hardware to compute the term

$$\frac{\Delta E}{\Delta net_i} x_j$$

$N$ times (if one multiplier is used then additional multiplexing hardware is required); and an addressing module and wires routed to select and read the $x_j$ terms.

If off-chip access to the gradient values is required, then the states of the neurons (xj) need to be made available off-chip as well, and this will require a multiplexing scheme and N chip pads.

Document IEEE Transactions on Neural Networks vol. 1, no. 1, March 1990, New York, US, pages 58-70; DEMBO 'Model-free distributed learning' describes a neural network in which an operation of training the network involves applying perturbation signals to all weights. The perturbation signals have to be uncorrelated or orthogonal to one other. This document describes the utilisation of stochastic procedures to produce a general error and to subsequently attempt to deduce a form of assignment of credit to individual weights from the resultant general error.

DISCLOSURE OF THE INVENTION

According to one aspect of the present invention, there is provided a neural network comprising: a plurality of neurons each having one or more inputs and an output; a plurality of weights, each weight being coupled to an output of one of the plurality of neurons and to an input of another one of the plurality of neurons so that the plurality of weights interconnects the plurality of neurons, wherein each weight has a strength factor by which the output of the corresponding one of the neurons is multiplied; an input port comprising inputs to a first group of the plurality of neurons; an output port comprising outputs of a second group of the plurality of neurons; and strength factor optimisation means for updating the value of each strength factor, the strength factor optimisation means comprising: receiving means for receiving from the output port a first output signal responsive to a predetermined input pattern applied to the input port; and applying means for temporarily applying a predetermined perturbation to the strength factor of one of the plurality of weights; wherein the receiving means is arranged to obtain from the output port a second output signal responsive to the predetermined input pattern while the predetermined perturbation is applied to the strength factor to provide a first error signal in accordance with a comparison between the first output signal and an expected output signal for the predetermined input pattern, and to provide a second error signal in accordance with a comparison between the second output signal and the expected output signal, and wherein the applying means is arranged to update the strength factor of the one of the plurality of weights in accordance with a comparison between the first and second error signals.

The output port is preferably connected to a differencing means to provide an error signal, which represents the error produced at the output port, for a given pair of input and training patterns, when the strength factor of a weight is perturbated and when it is not. The output of the differencing means is preferably connected to a multiplier to multiply the error signal by a factor inversely proportional to the perturbation applied to a strength factor of a weight, to produce a signal representing an updated value for the strength factor of that weight. The strength factor perturbating and refresh means preferably updates the values of the strength factors of each weight in accordance with the signal representing the update value for that strength factor received from the multiplying means.

Advantageously the neural network further comprises an input gain perturbating and refresh means to apply perturbations to input gains of neurons in the network and to update the value of each input gain depending on the difference between the signals appearing at the output port, for a given pair of input and training patterns, when that input gain is perturbated and when it is not.

Advantageously the neural network further comprises an output gain perturbating and refresh means to apply perturbations to output gains of neurons in the network and to update the value of each output gain depending on the difference between the signals appearing at the output port, for a given pair of input and training patterns, when that output gain is perturbated and when it is not.

According to another aspect of the present invention, there is provided a method for training a neural network, wherein the neural network comprises a plurality of neurons each having one or more inputs and an output, the output being obtained as a function of the one or more inputs, a plurality of weights each being coupled to an output of one and to the input of another of the plurality of neurons so that the plurality of weights interconnects the plurality of neurons, wherein each weight has a strength factor by which an output of the one of the neurons is multiplied; and wherein the neural network further comprises an input port comprising inputs to a first group of the plurality of neurons, and an output port comprising outputs of a second group of the plurality of neurons, the method comprising: (a) inputting a predetermined input pattern to the input port; (b) obtaining from the output port a first output signal responsive to the predetermined input pattern; (c) applying temporarily a predetermined perturbation to the strength factor of one of the plurality of weights; (d) obtaining from the output port a second output signal responsive to the predetermined input pattern while the predetermined perturbation is applied to the strength factor; (e) providing a first error signal in accordance with a comparison between the first output signal and an expected output signal for the predetermined input pattern; (f) providing a second error signal in accordance with a comparison between the second output signal and the expected output signal; and (g) updating the strength factor of the one of said plurality of weights in accordance with a comparison between the first and the second error signals.

During training of the neural network the value of the strength factor of each weight is perturbated, and then updated by an amount depending on the signal representing the update value for that strength factor.

This technique, called 'weight perturbation', relies on its ability to approximate the required derivative, that is the change in the value of each strength factor required to update it, according to the following equation:

$$\Delta w_{ij} = -\eta \, \frac{\Delta E}{\Delta_{pert} w_{ij}}$$

where

$\Delta E$ is $E_{pert}$ -$E$, i.e. the difference between the mean squared errors produced at the output of the network for a given pair of input and training patterns when a weight is perturbated $(E_{pert})$ and when it is not $(E)$;
$\Delta_{pert} w_{ij}$ is the perturbation applied to the strength factor at weight $w_{ij}$; and
$\Delta w_{ij}$ is the update amount for the strength factor of $w_{ij}$.

The gradient with respect to the strength factor may be evaluated by the forward difference approximation:

$$\frac{\partial E}{\partial w_{ij}} = \frac{\Delta E}{\Delta_{pert} w_{ij}} + O(\Delta_{pert} w_{ij}) = \frac{E(w_{ij}+pert_{ij})-E(w_{ij})}{pert_{ij}} + O(\Delta_{pert} w_{ij})$$

If the perturbation $\Delta_{pert} w_{ij}$ is small enough, the error term $O(\Delta_{pert} w_{ij})$ may be neglected and the strength factor update amount becomes:

$$\Delta w_{ij} = \frac{E(w_{ij} + pert_{ij}) - E(w_{ij})}{pert_{ij}}$$

where
$E()$ is the total mean square error produced at the output of the network for agiven pair of input and training patterns and a given set of values for the strength factors of the weights.

The order of the error of the forward difference approximation can be improved by using the central difference method so that:

$$\frac{\partial E}{\partial w_{ij}} = \frac{\Delta E}{\Delta_{pert} w_{ij}} - O(\Delta_{pert} w_{ij}^2) = \frac{E(w_{ij} + \dfrac{pert_{ij}}{2}) - E(w_{ij} - \dfrac{pert_{ij}}{2})}{pert_{ij}} - O(\Delta_{pert} w_{ij}^2)$$

if the perturbation $\Delta_{pert} w_{ij}$ is again small enough the strength factor update rule becomes:

$$\Delta w_{ij} = \frac{E(w_{ij} + \dfrac{pert_{ij}}{2}) - E(w_{ij} - \dfrac{pert_{ij}}{2})}{pert_{ij}}$$

however, the number of forward relaxations of a network of $N$ neurons is of the order $N^3$, rather than $N^3$ for the forward difference method. Thus either method can be selected on the basis of a speed/accuracy trade-off.

Note, that as $\eta$ and $pert_{ij}$ are both constants within a given strength factor, the analog implementation version can simply be written as:

$$\Delta w_{ij} = G(pert_{ij})\, \Delta E(w_{ij}, pert_{ij})$$

with

$$G(pert_{ij}) = -\frac{\eta}{pert_{ij}}$$

and

$$\Delta E(w_{ij}, pert_{ij}) = E(w_{ij} + pert_{ij}) - E(w_{ij})$$

The strength factor update hardware involves only the evaluation of the error with perturbated and unperturbated strength factors and then multiplication by a constant.

This technique is advantageous for analog VLSI implementation for the following reasons:

As the gradient

$$\frac{\delta E}{\delta w_{ij}}$$

is approximated by

$$\frac{E_{pert} - E}{\Delta_{pert} w_{ij}}$$

(where $\Delta_{pert} w_{ij}$ is the perturbation applied at weight $w_{ij}$), no back-propagation path is needed and only forward paths are required. This means, in terms of analog VLSI implementations, no bidirectional circuits and hardware for the back-propagation are needed. Also, the hardware used for the operation of the network is used for the training. Only single simple circuits to implement the weight update are required. This simplifies the implementation considerably.

Compared to Madaline Rule III, weight perturbation does not require the two neuron addressing modules, routing and extra multiplication.

Weight perturbation does not require any overheads in routing and addressing connections to every neuron to deliver the perturbations, since the same wires used to access the weights are used to deliver weight perturbations. Furthermore, Madaline Rule III requires extra routing to access the output state of each neuron and extra multiplication hardware is needed for the terms, which is not the case with weight perturbation. Finally, with weight perturbation, the approximated gradient values can be made available if needed at a comparatively low cost since, if the mean square error is required off-chip, then only one single extra pad is required. Otherwise, if approximated gradient values are to be calculated off-chip, no extra ship area or pads are required, since the output of the network would be accessible anyway.

In summary, weight perturbation is less expensive to implement in analog VLSI. The hardware cost in terms of VLSI chip area, programming complexity, hardware design time, and as a result the size of the neural network that can be implemented, is less than that required to implement Madaline Rule III.

The weight perturbation technique may also be used to train multi-layer recurrent networks, and many artificial neural network models with feedback, including: multi-layer neural networks; simple recurrent networks like Elman networks; and recurrent networks training to recognise temporal sequences (like Williams and Zipser networks). For all these networks, the hardware implementation of the weight perturbation technique is very similar. The weight perturbation technique can also be applied to fully interconnected multi-layer perceptrons.

The above and further features of the invention are set forth with particularity in the appended claims, and will become clearer from consideration of the following detailed description of exemplary embodiments of the present invention given with reference to the accompanying drawings.

BRIEF DESCRIPTION OF THE DRAWINGS:

Figure 1 is a schematic diagram of a neural network embodying the present invention; and
Figure 2 is a schematic diagram of a multi-layer recurrent exclusive-OR network embodying the present invention.

(Similar reference numerals have been used throughout both figures to identify corresponding elements).

DETAILED DESCRIPTION OF THE EMBODIMENTS

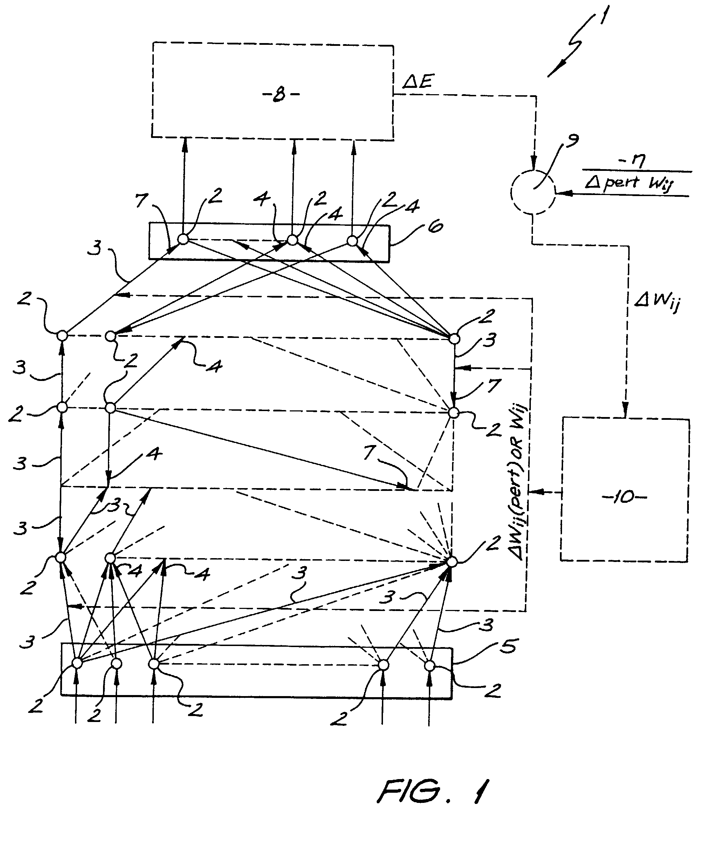

Turning now to Figure 1, neural network 1 comprises an array of neurons, or neurodes, 2 only some of which are shown for the sake of clarity. The neurons 2 are interconnected by synapses, or weights 3, to form an array depending on the desired function. Feed forward arrays have the flow of signals, shown by arrows 4, from the nodes of the input port 5 to the nodes of the output port 6, that is in the upwards direction only. Recurrent networks include reverse flows indicated by arrows 7 directed downwards. The weights are identifiable throughout the array by coordinates x and y, of which i and j are taken to be any particular case.

The neurons at output port 6 are connected to a differencing means 8. Differencing means 8 calculates the difference between the mean squared error produced at the output of the network for a given pair of input and training signals applied at input port 5 when the strength factors of the weights are perturbated $E_{pert}$ and when they are not perturbated $E$.

The output of differencing means 8, $\Delta E$, is fed to a multiplying means 9 where it is multiplied by a factor proportional to the reciprocal of the perturbation applied to the strength factor at weight $w_{ij}$.

The output of the multiplier is the update rule for the strength factor at that weight, $\Delta w_{ij}$ and this is applied to an input of the weight perturbation and weight refreshing system 10. The output of the weight perturbation and refreshing system 10 alternates between the sum of a perturbation $\Delta_{pert}W_{ij}$ and the strength factors $W_{ij}$ and the updated values for the strength factors $W_{ij}$ alone.

When the strength factors of the weights are perturbated, the error gradient and magnitude are identified by the differencing means 8, and the value of the strength factor of each weight is then refreshed. The strength factors may be updated repeatedly until the error is within preset limits. At this point training is finished and the network is ready for operation.

The application of the technique to a network performing an exclusive-OR function will now be described.

In order to perform exclusive-OR the network must recognise each of the four possible pairs of inputs, and output the correct one of two outputs, as shown in the following table:

| EXCLUSIVE OR (XOR) | |
|---|---|
| INPUTS | OUTPUTS |
| 0   0 | 0 |
| 0   1 | 1 |
| 1   0 | 1 |
| 1   1 | 0 |

The learning procedure may be implemented as shown in the following table:

```
1   for each pattern p do {
2        E = ForwardPass()
3        ClearDeltaWeights()
4        for each weight w_ij do {
5             E_pert = applyPerturbate(w_ij)
6             DeltaError = E_pert - E
7             DeltaW[i][j] = -η *
                  DeltaError/Perturbation
                  (If batch mode then accumulate)
8             RemovePerturbation(w_ij)
9        }
10       if not batch mode then Update Weights()
11  }
12  if batch mode then update weights
```

Line 1 above applies the training loop (lines enclosed in the outermost curly brackets) for each pattern that the network is required to recognise.

Line 2 performs a forward pass through the network. This means that the effect of the application of the current input pattern p is propagated through the network. Propagation takes place through all neurodes and synapses whether they are forward connections or recurrent connections (if recurrent connections exist, then a relaxation process is used to relax the network towards a stable state). Following the propagation of the current input pattern, the total mean squared error is computed using the actual output of the network and the expected output. The error is returned in E.

Line 3 clears previous weight modifications.

Line 4 iterates on all the weights the instructions stated in lines 5 to 8.

Line 5 applies a perturbation to the weight currently being considered for modification and repropagates the input pattern the same way as in Line 2 and calculates the perturbated total mean squared error which is returned in $E_{pert}$

Line 6 calculates the DeltaError, the difference between the perturbated and unperturbated errors. Line 7 computes the modification of the weight currently being considered using DeltaError, the strength of the perturbation that has been applied to the weight and the learning rate η. If batch training mode is used, then weight modifications are accumulated to the previous modifications computed for that weight. Otherwise previous modifications are cleared and the current one is stored (this is done by the = assignment).

Line 8 removes the perturbation that has been applied to the current weight and restores its previous value so the next weight can be considered for modification.

Line 9 is the bound of the weight iteration loop.

Line 10 updates the weights of the network according to the compared modifications if batch mode is not being used.

Line 11 is the bound of the iteration of all patterns to be taught to the network.

Line 12 updates the weights according to the computed modifications if batch mode is being used.

As indicated by the procedure above, either batch mode or on-line mode (not batch) can be used. The difference is: in batch mode the strength factors of the weights are updated after their modifications are accumulated over all patterns, whereas in on-line mode the strength factors of the weights are updated after the presentation of each pattern.

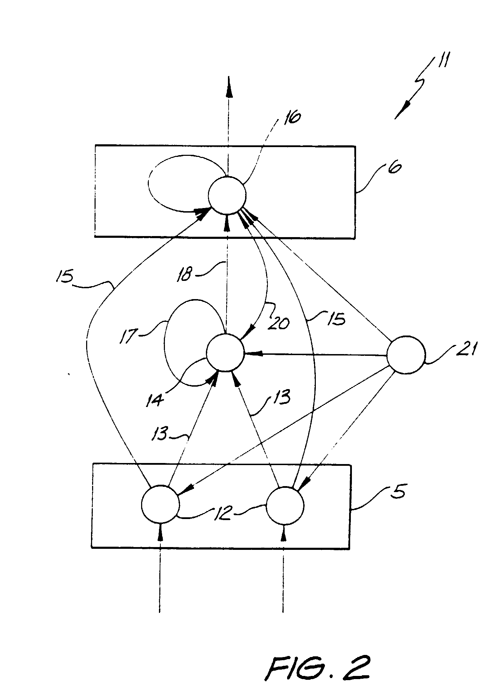

A recurrent exclusive-OR function 11 network will now be described with reference to figure 2. This network has two neurons 12 in the input port 5 connected by respective weights 13 paths to a single intermediate neuron 14. The two neurons 12 are also connected, via weights 15 to a single neuron 16 in the output port 6. The intermediate neuron 14 is connected by a feedback weight 17 to itself and by a feedforward weight 18 to the neuron 16 in the output port. The neuron 16 in the output port is connected by feedback weight 19 to itself and by a feedback weight 20 to the intermediate neuron 14. An offset neuron 21 is connected to each of the other neurons by respective weights. Typical training parameters are given in the following table:

| Parameter | RBP | RWP |
|---|---|---|
| Perturbation strength | NA | 0.001 |
| Neuron relaxation constant | 0.01 | 0.01 |
| Weight relaxation constant | 0.1 | NA |
| Network Stability constant | 0.0000001 | 0.0000001 |
| Learning rate | 0.3 | 0.3 |
| Convergence criteria | 0.1 | 0.1 |
| Initial weight range | 0.7 | 0.7 |
| Sensitivity criteria | 0.3 | 0.3 |

Neurons with programmable gain may also be trained using the weight perturbation method by simply treating the programmable gain as an additional weight in the network. The neuron gain may either be applied to the net input of the neuron or the output of the neuron, and may attenuate or amplify the net input to a neuron, or the output value of a neuron. The advantages of such a feature, are

- increased learning speed;
- weight normalisation;
- automatic normalisation of the training set;
- the facilitation of pruning as the gain reflects the extent of the participation of a neuron in the network,

The node activation function is given by,

$$y_i = G_i \cdot f_i(g_i \cdot net_i)$$

where $net_i$ is,

$$net_i = \sum_J w_{ij} y_j$$

$f_i(\;\;)$ is the transfer function of node i, $g_i$ is the net input gain of node $i$ and $G_i$ is the output gain of node $i$.

The gradient with respect to the input gain is

$$\frac{\partial E}{\partial g_i} = \frac{E_{\gamma_i(g)} - E}{\gamma_i(g)} + O(\gamma_i(g)) = \frac{\Delta E_{\gamma_i(g)}}{\gamma_i(g)} + O(\gamma_i(g))$$

The approximated gradient is then,

$$\frac{\partial E}{\partial g_i} \cong \frac{\Delta E_{\gamma_i(g)}}{\gamma_i(g)}$$

where,

$$\Delta E_{\gamma i(g)} = E_{\gamma \; i(g)} - E$$

and $\gamma_i(g)$ is the perturbation applied to the input gain $g_i$, $E_{\gamma \; i(g)}$ is the Mean Square Error of the network output with the perturbation applied, $E$ is the Mean Square Error without the perturbation applied. The input gain update rules then become:

$$\Delta g_i = -\eta \; \frac{\Delta E_{\gamma \; i(g)}}{\gamma_i(g)}$$

where $\eta$ is the learning rate.

The gradient with reference to the output gain is

$$\frac{\partial E}{\partial G_i} = \frac{E_{\gamma_i(G)} - E}{\gamma_i(G)} - O(\gamma_i(G)) = \frac{\Delta E_{\gamma_i(G)}}{\gamma_i(G)} + O(\gamma_i(G))$$

The approximated gradient is then,

$$\frac{\partial E}{\partial G_i} \cong \frac{\Delta E_{\gamma_i(G)}}{\gamma_i(G)}$$

where,

$$\Delta E_{\gamma i(G)} = E_{\gamma_i(G)} - E$$

and $\gamma_i(G)$ is the perturbation applied to the input gain $G_i$, and $E_{\gamma i(G)}$ is the Mean Square Error of the network output with the perturbation applied, $E$ is the Mean Square Error without the perturbation applied. The gain update rules then become:

$$\Delta G_i = -\eta \frac{\Delta E \gamma_{i(G)}}{\gamma_i(G)}$$

where $\eta$ is the learning rate.

Gain Perturbation can then be implemented using an algorithm that is very similar to that for weight perturbation. In fact a direct substitution of gain for weight can be made.

As there is a limit of two gains per node, (one for each of the net input and output of the node), the computational complexity only increases linearly with the number of nodes in the network. Thus the cost of processing a single training epoch will only increase as the ratio of the number of nodes over the number of interconnections. In a fully interconnected recurrent net this is:

$$C_n = \frac{2}{N}$$

where $C_n$ is the increase in cost of processing the gains, N is the number of nodes.

For a fully connected feedforward network it is:

$$C_n = \frac{2 N_T}{\sum_{L=1}^{L-2} N_l . N_{l+1}}$$

where $N_T$ is the total number of nodes, $N_j$ is the number of nodes in layer $j$ and $L$ is the total number of layers in the network which are numbered (0, 1, 2, ...., L-2, L-1).

The gain perturbation algorithmhas been tested on several problems using non-recurrent feed forward networks in combination with weight perturbation and using weight perturbation only, as a control. The results show a fast convergence to the same error threshold using gain perturbation in combination with weight perturbation.

It has been found that the method is insensitive to the size of the gain perturbation factor, but very sensitive to the rate of convergence and the permissible gain range. The convergence rate Was 0.3 and the perturbation magnitude was $10^{-5}$ for Weight Perturbation.

| Problem | Error | Weight Perturbation | Weight Perturbation + Gain Perturbation |
|---------|-------|---------------------|------------------------------------------|
| XOR | 0.04 | 145 | 55 |

The techniques require an input vector and a weight vector to be presented to the network, and an output vector is generated. It is not necessary to know about the internal architecture or activity of the network in order to perform optimisation of the weight space. Access to the synaptic weights, input neurons and output neurons is sufficient. Gain perturbation performs an approximation of the gradient descent algorithms from which it is derived. As such it can solve any problems that can be solved by true gradient descent provided the perturbation signal magnitude is relatively small, with respect to the gain magnitude, and the convergence factor is small. This algorithm is particularly suited for VLSI or other hardware implementations of artificial neural networks due to its minimal hardware requirements.

## Claims

1. A neural network (1; 11) comprising:

   a plurality of neurons (2; 12, 14, 16, 21) each having one or more inputs and an output;
   a plurality of weights (3; 13, 15, 17, 18, 19, 20), each weight (3; 13, 15, 17, 18, 19, 20) being coupled to an output of one of the plurality of neurons (2; 12, 14, 16, 21) and to an input of another one of the plurality of neurons (2; 12, 14, 16, 21) so that the plurality of weights (3; 13, 15, 17, 18, 19, 20) interconnects the plurality of neurons (2; 12, 14, 16, 21), wherein each weight (3; 13, 15, 17, 18, 19, 20) has a strength factor by which the output of the corresponding one of the neurons (2; 12, 14, 16, 21) is multiplied;
   an input port (5) comprising inputs to a first group (12) of the plurality of neurons (2; 12, 14, 16, 21);
   an output port (6) comprising outputs of a second group (16) of the plurality of neurons (2; 12, 14, 16, 21); and

   strength factor optimisation means (8, 10) for updating the value of each strength factor, the strength factor optimisation means (8, 10) comprising:
   receiving means (8) for receiving from the output port (6) a first output signal responsive to a predetermined input pattern applied to the input port (5); and
   applying means (10) for temporarily applying a predetermined perturbation to the strength factor of one of the plurality of weights (3; 13, 15, 17, 18, 19, 20);
   wherein the receiving means (8) is arranged to obtain from the output port (6) a second output signal responsive to the predetermined input pattern while the predetermined perturbation is applied to the strength factor to provide a first error signal in accordance with a comparison between the first output signal and an expected output signal for the predetermined input pattern, and to provide a second error signal in accordance with a comparison between the second output signal and the expected output signal, and wherein the applying means (10) is arranged to update the strength factor of the one of the plurality of weights (3; 13, 15, 17, 18, 19, 20) in accordance with a comparison between the first and second error signals.

2. The neural network of claim 1, wherein the strength factor optimising means (8, 10) comprises differencing means (8) arranged to provide a first output error signal that is a difference between the first and the second error signals.

3. The neural network of claim 2, wherein the strength factor optimisating means (8, 10) further comprises a multiplier (9) coupled to the differencing means (8) that multiplies the first output error signal by a factor inversely proportional to the predetermined perturbation to the strength factor to obtain an updated value for the strength factor of the one of the plurality of weights (3; 13, 15, 17, 18, 19, 20).

4. The neural network of any preceding claim, wherein each neuron (2; 12, 14, 16, 21) has an associated input gain, the network (1; 11) further comprising:

   input gain optimising means (8, 10) for updating the value of the input gain of each neuron (2; 12, 14, 16, 21) in the network (1; 11), the input gain optimisation means comprising:
   input gain applying means (10) for temporarily applying a predetermined perturbation to the input gain of one of the plurality of neurons (2; 12, 14, 16, 21); and
   input gain receiving means for receiving from the output port (6; 16) a third output signal responsive to the predetermined input pattern while the predetermined perturbation is applied to the input gain, wherein the input gain receiving means is arranged to obtain from the output port (6) a third error signal in accordance with a comparison between the third output signal and the expected output signal; and wherein the input gain applying means (10) is arranged to update the input gain of the one of the plurality of neurons (2; 12, 14, 16, 21) in accordance with a comparison between the first and the third error signals.

5. The neural network of claim 4, wherein the input gain optimising means (8, 10) comprises input gain differencing means (8) arranged to provide a second output error signal that is a difference between the first error signal and the third error signal.

6. The neural network of claim 5, wherein the input gain optimising means (8, 10) further comprises an input gain multiplier (9) coupled to the input gain differencing means (8) that multiplies the second output error signal by a factor inversely proportional to the predetermined perturbation to the input gain to obtain an updated value for the input gain of the one of the plurality of neurons (2; 12, 14, 16, 21).

7. The neural network of any preceding claim, wherein each neuron has an associated output gain, the network (1; 11) further comprising:

   output gain optimising means (8, 10) for updating the value of the output gain of each neuron (2; 12, 14, 16, 21) in the network (1; 11), the output gain optimisation means (8, 10) comprising:
   output gain applying means (10) for temporarily applying a predetermined perturbation to the output gain of one of the plurality of the neurons (2; 12, 14, 16, 21);
   output gain receiving means (8) for receiving from the output port (6) a fourth output signal responsive to the predetermined input pattern while the predetermined perturbation is applied to the output gain; wherein the output gain receiving means (8) in arranged to obtain from the output port (6) a fourth error signal in accordance with a comparison between the fourth output signal and the expected output signal; and wherein the output gain applying means (10) is arranged to update the output gain of the one of the plurality of neurons (2; 12, 14, 16, 21) in accordance with a comparison between the first and the fourth error signals.

8. The neural network of claim 7, wherein the output gain optimising means (8, 10) comprises an output gain differencing means (8) for providing a third output error signal that is a difference between the first error signal and the fourth error signal.

9. The neural network of claim 8, wherein the output gain optimising means (8, 10) further comprises an output gain multiplier (9) coupled to the output gain differencing means (8) that multiplies the third output error signal by a factor inversely proportional to the predetermined perturbation to the output gain to obtain an updated value for the output gain of the one of the plurality of neurons (2; 12, 14, 16, 21).

10. The neural network of any preceding claim, wherein the first error signal is calculated as being proportional to the total mean square error between the first output signal and the expected output signal.

11. A method for training a neural network (1; 11), wherein the neural network comprises a plurality of neurons (2; 12, 14, 16, 21) each having one or more inputs and an output, the output being obtained as a function of the one or more inputs, a plurality of weights (3; 13, 15, 17, 18, 19, 20) each being coupled to an output of one and to the input of another of the plurality of neurons (2; 12, 14, 16, 21) so that the plurality of weights (3; 13, 15, 17, 18, 19, 20) interconnects the plurality of neurons (2, 12, 14, 16, 21), wherein each weight (3; 13, 15, 17, 18, 19, 20) has a strength factor by which an output of the one of the neurons (2; 12, 14, 16, 21) is multiplied; and wherein the neural network (1; 11) further comprises an input port (5) comprising inputs to a first group (12) of the plurality of neurons (2; 12, 14, 16, 21), and an output port (6) comprising outputs of a second group (16) of the plurality of neurons (2; 12, 14, 16, 21), the method comprising:

> (a) inputting a predetermined input pattern to the input port (5);
> (b) obtaining from the output port (6) a first output signal responsive to the predetermined input pattern;
> (c) applying temporarily a predetermined perturbation to the strength factor of one of the plurality of weights (3; 13, 15, 17, 18, 19, 20);
> (d) obtaining from the output port (6) a second output signal responsive to the predetermined input pattern while the predetermined perturbation is applied to the strength factor;
> (e) providing a first error signal in accordance with a comparison between the first output signal and an expected output signal for the predetermined input pattern;
> (f) providing a second error signal in accordance with a comparison between the second output signal and the expected output signal; and
> (g) updating the strength factor of the one of said plurality of weights (3; 13, 15, 17, 18, 19, 20) in accordance with a comparison between the first and the second error signals.

12. The method of claim 11, wherein the steps (c), (d), (e), (f) and (g) are repeated for each one of the plurality of neurons (2; 12, 14, 16, 21).

13. The method of claim 11 or 12, wherein each neuron (2; 12, 14, 16, 21) has an associated input gain, the output being obtained by applying a function to the one or more inputs multiplied by the input gain, the method further comprising:

> (h) applying a predetermined perturbation to the input gain of one of the plurality of neurons (2; 12, 14, 16, 21);
> (i) obtaining from the output port (6) a third output signal responsive to the predetermined input pattern while the predetermined perturbation is applied to the input gain;
> (j) providing a third error signal in accordance with a comparison between the third output signal and the expected output signal; and
> (k) updating the input gain of the one of the plurality of neurons (2; 12, 14, 16, 21) in accordance with a comparison between the first and third error signals.

14. The method of claim 13, wherein the steps (h), (i), (j) and (k) are repeated for each of the plurality of neurons (2; 12, 14, 16, 21).

15. The method of any of claims 11 to 14, wherein each neuron (2; 12, 14, 16, 21) has an associated output gain, the output of the neuron being the output gain multiplied by a function of the one or more inputs the method further comprising:

> (l) applying a predetermined perturbation to the output gain of one of the plurality of neurons (2; 12, 14, 16, 21);
> (m) obtaining from the output port (6) a fourth output signal responsive to the predetermined input pattern while the predetermined perturbation is applied to the output gain;
> (n) providing a fourth error signal in accordance with a comparison between the fourth output signal and the expected output signal; and
> (o) updating the output gain of the one of the plurality of neurons (2; 12, 14, 16, 21) in accordance with a comparison between the first and the fourth error signals.

16. The method of claim 15, wherein the steps (1), (m), (n) and (o) are repeated for each of the plurality of neurons (2; 12, 14, 16, 21).

17. The method of any of claims 11 to 16, wherein step (e) comprises calculating the first error signal as being proportional to the total mean square error between the first output signal and the expected output signal.

**Patentansprüche**

1. Neuronales Netzwerk (1; 11), aufweisend:

   mehrere Neuronen (2; 12, 14, 16, 21) mit jeweils einem oder mehreren Eingängen sowie einem Ausgang, mehrere Gewichte (3; 13, 15, 17, 18, 19, 20), die jeweils mit einem Ausgang eines der Neuronen (2; 12, 14, 16, 21) und mit einem Eingang eines anderen der Neuronen (2; 12, 14, 16, 21) verbunden sind, so daß die Gewichte (3; 13, 15, 17, 18, 19, 20) die Neuronen (2; 12, 14, 16, 21) miteinander verbinden, wobei jedes Gewicht (3; 13, 15, 17, 18, 19, 20) einen Stärkefaktor aufweist, mit dem die Ausgabe des entsprechenden Neurons (2; 12, 14, 16, 21) multipliziert wird,
   einen Eingangsanschluß (5) mit Eingängen für eine erste Gruppe (12) der Neuronen (2; 12, 14, 16, 21),
   einen Ausgangsanschluß (6) mit Ausgängen einer zweiten Gruppe (16) der Neuronen (2; 12, 14, 16, 21), und
   eine Stärkefaktor-Optimierungseinrichtung (8, 10) zur Aktualisierung des Werts jedes Stärkefaktors, aufweisend:

   eine Empfangseinrichtung (8) zur Entgegennahme eines ersten Ausgangssignals von dem Ausgangsanschluß (6) in Antwort auf ein vorbestimmtes Eingangsmuster, das an den Eingangsanschluß (5) angelegt wird, und
   eine Anlege-Einrichtung (10) zum vorübergehenden Anlegen einer vorbestimmten Störung an den Stärkefaktor einer der Gewichte (3; 13, 15, 17, 18, 19, 20),
   wobei die Empfangseinrichtung (8) eingerichtet ist, vom Ausgangsanschluß (6) ein zweites Ausgangssignal in Antwort auf das vorbestimmte Eingangsmuster zu erhalten, während die vorbestimmte Störung an den Stärkefaktor angelegt wird, um entsprechend einem Vergleich zwischen dem ersten Ausgangssignal und einem erwarteten Ausgangssignal für das vorbestimmte Eingangsmuster ein erstes Fehlersignal und entsprechend einem Vergleich zwischen dem zweiten Ausgangssignal und dem erwarteten Ausgangssignal ein zweites Fehlersignal zu liefern, und wobei die Anlegeeinrichtung (10) eingerichtet ist, den Stärkefaktor des genannten einen Gewichts (3; 13, 15, 17, 18, 19, 20) entsprechend einem Vergleich zwischen dem ersten und dem zweiten Fehlersignal zu aktualisieren.

2. Neuronales Netzwerk nach Anspruch 1, wobei die Stärkefaktor-Optimierungseinrichtung (8, 10) eine Differenzeinrichtung (8) aufweist, um ein erstes Ausgangsfehlersignal auszugeben, das die Differenz zwischen dem ersten und dem zweiten Fehlersignal darstellt.

3. Neuronales Netzwerk nach Anspruch 2, wobei die Stärkefaktor-Optimierungseinrichtung (8, 10) außerdem einen mit der Differenzeinrichtung (8) verbundenen Multiplizierer (9) aufweist, der das erste Ausgangsfehlersignal mit einem Faktor multipliziert, der umgekehrt proportional zur vorbestimmten Störung für den Stärkefaktor ist, um einen aktualisierten Wert für den Stärkefaktor des genannten einen Gewichts (3; 13, 15, 17, 18, 19, 20) zu erhalten.

4. Neuronales Netzwerk nach einem der vorhergehenden Ansprüche, wobei jedes Neuron (2; 12, 14, 16, 21) eine zugeordnete Eingangsverstärkung aufweist und das Netzwerk (1; 11) beinhaltet:

   eine Eingangsverstärkungs-Optimierungseinrichtung (8, 10) zur Aktualisierung des Werts der Eingangsverstärkung jedes Neurons (2; 12, 14, 16, 21) im Netzwerk (1; 11), aufweisend:
   eine Eingangsverstärkungs-Anlegeeinrichtung (10) zum vorübergehenden Anlegen einer vorbestimmten Störung an die Eingangsverstärkung eines der Neuronen (2; 12, 14, 16, 21), und
   eine Eingangsverstärkungs-Empfangseinrichtung zur Entgegennahme eines dritten Ausgangssignals von dem Ausgangsanschluß (6; 16) in Antwort auf das vorbestimmte Eingangsmuster, während die vorbestimmte Störung an die Eingangsverstärkung angelegt wird, wobei die Eingangsverstärkungs-Empfangseinrichtung eingerichtet ist, entsprechend einem Vergleich zwischen dem dritten Ausgangssignal und dem erwarteten Ausgangssignal ein drittes Fehlersignal von dem Ausgangsanschluß (6) zu erhalten, und wobei die Eingangsverstärkungs-Anlegeeinrichtung (10) eingerichtet ist, die Eingangsverstärkung des einen Neurons (2; 12, 14, 16, 21) entsprechend dem Vergleich zwischen dem ersten und dem dritten Fehlersignal zu aktualisieren.

5. Neuronales Netzwerk nach Anspruch 4, wobei die Eingangsverstärkungs-Optimierungseinrichtung (8, 10) eine Eingangsverstärkungs-Differenzeinrichtung (8) beinhaltet, um ein zweites Ausgangsfehlersignal zu liefern, das eine Differenz zwischen dem ersten Fehlersignal und dem dritten Fehlersignal darstellt.

6. Neuronales Netzwerk nach Anspruch 5, wobei die Eingangsverstärkungs-Optimierungseinrichtung (8, 10) außerdem einen Eingangsverstärkungs-Multiplizierer (9) aufweist, der mit der Eingangsverstärkungs-Differenzeinrichtung (8) verbunden ist und das zweite Ausgangsfehlersignal mit einem Faktor multipliziert, der umgekehrt proportional zur vorbestimmten Störung für die Eingangsverstärkung ist, um einen aktualisierten Wert für die Eingangsverstärkung des einen Neurons (2; 12, 14, 16, 21) zu erhalten.

7. Neuronales Netzwerk nach einem der vorhergehenden Ansprüche, wobei jedes Neuron eine zugeordnete Ausgangsverstärkung aufweist und das Netzwerk (1; 11) außerdem beinhaltet:

eine Ausgangsverstärkungs-Optimierungseinrichtung (8, 10) zur Aktualisierung des Werts der Ausgangsverstärkung jedes Neurons (2; 12, 14, 16, 21) im Netzwerk (1; 11), aufweisend:
eine Ausgangsverstärkungs-Anlegeeinrichtung (10) zum vorübergehenden Anlegen einer vorbestimmten Störung an die Ausgangsverstärkung eines der Neuronen (2; 12, 14, 16, 21),
eine Ausgangsverstärkungs-Empfangseinrichtung (8) zur Entgegennahme eines vierten Ausgangssignals von dem Ausgangsanschluß (6) in Antwort auf ein vorbestimmtes Eingangsmuster, während die vorbestimmte Störung an die Ausgangsverstärkung angelegt wird, wobei die Ausgangsverstärkungs-Empfangseinrichtung (8) eingerichtet ist, entsprechend einem Vergleich zwischen dem vierten Ausgangssignal und dem erwarteten Ausgangssignal ein viertes Fehlersignal von dem Ausgangsanschluß (6) zu erhalten, und wobei die Ausgangsverstärkungs-Anlegeeinrichtung (10) eingerichtet ist, die Ausgangsverstärkung des einen Neurons (2; 12, 14, 16, 21) entsprechend einem Vergleich zwischen dem ersten und dem vierten Ausgangssignal zu aktualisieren.

8. Neuronales Netzwerk nach Anspruch 7, wobei die Ausgangsverstärkungs-Optimierungseinrichtung (8, 10) eine Ausgangsverstärkungs-Differenzeinrichtung (8) zur Lieferung eines dritten Ausgangsfehlersignals, das die Differenz zwischen dem ersten Fehlersignal und dem vierten Fehlersignal darstellt, aufweist.

9. Neuronales Netzwerk nach Anspruch 8, wobei die Ausgangsverstärkungs-Optimierungseinrichtung (8, 10) außerdem einen Ausgangsverstärkungs-Multiplizierer (9) aufweist, der mit der Ausgangsverstärkungs-Differenzeinrichtung (8) verbunden ist und das dritte Ausgangsfehlersignal mit einem Faktor multipliziert, der umgekehrt proportional zur vorbestimmten Störung des Ausgangssignals ist, um einen aktualisierten Wert für die Ausgangsverstärkung des einen Neurons (2; 12, 14, 16, 21) zu erhalten.

10. Neuronales Netzwerk nach einem der vorhergehenden Ansprüche, wobei das erste Fehlersignal proportional zum gesamten mittleren quadratischen Fehler zwischen dem ersten Ausgangssignal und dem erwarteten Ausgangssignal ist.

11. Lernverfahren für ein neuronales Netzwerk (1; 11), wobei das neuronale Netzwerk mehrere Neuronen (2; 12, 14, 16, 21) mit jeweils einem oder mehreren Eingängen und einem Ausgang, der als Funktion des einen Eingangs bzw. der mehreren Eingänge erhalten wird, und mehrere Gewichte (3; 13, 15, 17, 18, 19, 20) beinhaltet, die jeweils mit einem Ausgang eines und dem Eingang eines anderen der Neuronen (2; 12, 14, 16, 21) verbunden sind, so daß sie die Neuronen (2, 12, 14, 16, 21) miteinander verbinden, wobei jedes Gewicht (3; 13, 15, 17, 18, 19, 20) einen Stärkefaktor aufweist, mit dem eine Ausgabe des einen der Neuronen (2; 12, 14, 16, 21) multipliziert wird, und wobei das neuronale Netzwerk (1; 11) außerdem einen Eingangsanschluß (5) mit Eingängen für eine erste Gruppe (12) der Neuronen (2; 12, 14, 16, 21) und einen Ausgangsanschluß (6) mit Ausgängen einer zweiten Gruppe (16) der Neuronen (2; 12, 14, 16, 21) beinhaltet, und wobei das Verfahren die folgenden Schritte aufweist:

(a) Eingeben eines vorbestimmten Eingangsmusters in den Eingangsanschluß (5),
(b) Erhalten eines ersten Ausgangssignals vom Ausgangsanschluß (6) in Antwort auf das vorbestimmte Eingangsmuster,
(c) vorübergehendes Anlegen einer vorbestimmten Störung an den Stärkefaktor eines der Gewichte (3; 13, 15, 17, 18, 19, 20),
(d) Erhalten eines zweiten Ausgangssignals vom Ausgangsanschluß (6) in Antwort auf das vorbestimmte Eingangsmuster, während die vorbestimmte Störung an den Stärkefaktor angelegt wird,
(e) Liefern eines ersten Fehlersignals entsprechend einem Vergleich zwischen dem ersten Ausgangssignal und einem erwarteten Ausgangssignal für das vorbestimmte Eingangsmuster,
(f) Liefern eines zweiten Fehlersignals entsprechend einem Vergleich zwischen dem zweiten Ausgangssignal und dem erwarteten Ausgangssignal, und
(g) Aktualisieren des Stärkefaktors des einen Gewichts (3; 13, 15, 17, 18, 19, 20) entsprechend einem Vergleich zwischen dem ersten und dem zweiten Fehlersignal.

12. Verfahren nach Anspruch 11, wobei die Schritte (c), (d), (e), (f) und (g) für jedes der Neuronen (2; 12, 14, 16, 21) wiederholt werden.

13. Verfahren nach Anspruch 11 oder 12, wobei jedes Neuron (2; 12, 14, 16, 21) eine zugeordnete Eingangsverstärkung aufweist und die Ausgabe durch Anwenden einer Funktion auf die eine oder mehrere Eingaben, multipliziert mit der Eingangsverstärkung, erhalten wird, wobei das Verfahren folgende weitere Schritte aufweist:

(h) Anlegen einer vorbestimmten Störung an die Eingangsverstärkung eines der Neuronen (2; 12, 14, 16, 21),
(i) Erhalten eines dritten Ausgangssignals von dem Ausgangsanschluß (6) in Antwort auf das vorbestimmte Eingangsmuster, während die vorbestimmte Störung an die Eingangsverstärkung angelegt wird,
(j) Liefern eines dritten Fehlersignals entsprechend einem Vergleich zwischen dem dritten Ausgangssignal und dem erwarteten Ausgangssignal, und
(k) Aktualisieren der Eingangsverstärkung des einen der Neuronen (2; 12, 14, 16, 21) entsprechend einem Vergleich zwischen dem ersten und dem dritten Fehlersignal.

14. Verfahren nach Anspruch 13, wobei die Schritte (h), (i), (j) und (k) für jedes der Neuronen (2; 12, 14, 16, 21) wiederholt werden.

15. Verfahren nach einem der Ansprüche 11 bis 14, wobei jedes Neuron (2; 12, 14, 16, 21) eine zugeordnete Ausgangsverstärkung aufweist und die Ausgabe des Neurons die Ausgangsverstärkung multipliziert mit einer Funktion der einen oder mehreren Eingänge darstellt, wobei das Verfahren folgende weitere Schritte aufweist:

(l) Anlegen einer vorbestimmten Störung an die Ausgangsverstärkung eines der Neuronen (2; 12, 14, 16, 21),
(m) Erhalten eines vierten Ausgangssignals von dem Ausgangsanschluß (6) in Antwort auf das vorbestimmte Eingangsmuster, während die vorbestimmte Störung an die Ausgangsverstärkung angelegt wird,
(n) Liefern eines vierten Fehlersignals entsprechend einem Vergleich zwischen dem vierten Ausgangssignal und dem erwarteten Ausgangssignal, und
(o) Aktualisieren der Ausgangsverstärkung des einen der Neuronen (2; 12, 14, 16, 21) entsprechend einem Vergleich zwischen dem ersten und dem vierten Fehlersignal.

16. Verfahren nach Anspruch 15, wobei die Schritte (l), (m), (n) und (o) für jedes der Neuronen (2; 12, 14, 16, 21) wiederholt werden.

17. Verfahren nach einem der Ansprüche 11 bis 16, wobei Schritt (e) das Berechnen des ersten Fehlersignals proportional zum gesamten mittleren quadratischen Fehler zwischen dem ersten Ausgangssignal und dem erwarteten Ausgangssignal beinhaltet.

**Revendications**

1. Réseau neuronal (1; 11) comprenant:

une pluralité de neurones (2; 12, 14, 16, 21) comprenant chacun une ou plusieurs entrées et une sortie;
une pluralité de poids (3; 13, 15, 17, 18, 19, 20), chaque poids (3; 13, 15, 17, 18, 19, 20) étant couplé à une sortie d'un neurone de la pluralité de neurones (2; 12, 14, 16, 21) et à une entrée d'un autre neurone de la pluralité de neurones (2; 12, 14, 16, 21) de façon que la pluralité de poids (3; 13, 15, 17, 18, 19, 20) est en interconnexion avec la pluralité de neurones (2; 12, 14, 16, 21), dans lequel chaque poids (3; 13, 15, 17, 18, 19, 20) comporte un facteur d'amplitude avec lequel est multipliée la sortie de celui correspondant des neurones (2; 12, 14, 16, 21);
un port d'entrée (5) comprenant des entrées pour un premier groupe (12) de la pluralité de neurones (2; 12, 14, 16, 21);
un port de sortie (6) comprenant des sorties d'un second groupe (16) de la pluralité de neurones (2; 12, 14, 16, 21); et
des moyens d'optimisation de facteur d'amplitude (8, 10) pour actualiser la valeur de chaque facteur d'amplitude, les moyens d'optimisation de facteur d'amplitude (8, 10) comprenant:

des moyens de réception (8) pour recevoir du port de sortie (6) un premier signal de sortie sensible à un motif d'entrée prédéterminé appliqué au port d'entrée (5); et
des moyens d'application (10) pour appliquer temporairement une perturbation prédéterminée au facteur d'amplitude d'un poids de la pluralité de poids (3; 13, 15, 17, 18, 19, 20);
dans lequel les moyens de réception (8) sont prévus de manière à obtenir du port de sortie (6) un second signal de sortie sensible au motif d'entrée prédéterminé tandis que la perturbation prédéterminée est appliquée au facteur d'amplitude afin de fournir un premier signal d'erreur en fonction d'une comparaison entre le premier signal de sortie et un signal de sortie attendu pour le motif d'entrée prédéterminé, et de fournir un second signal d'erreur en fonction d'une comparaison entre le second signal de sortie et le signal de sortie attendu, et dans lequel les moyens d'application (10) sont prévus de manière à actualiser le facteur d'amplitude du poids de la pluralité de poids (3; 13, 15, 17, 18, 19, 20) en fonction d'une comparaison entre les premier et second signaux d'erreur.

2. Réseau neuronal selon la revendication 1, dans lequel les moyens d'optimisation de facteur d'amplitude (8, 10) comprennent des moyens de différentiation (8) prévus de manière à fournir un premier signal d'erreur de sortie qui est constitué d'une différence entre les premier et second signaux d'erreur.

3. Réseau neuronal selon la revendication 2, dans lequel les moyens d'optimisation de facteur d'amplitude (8, 10) comprennent également un multiplieur (9) couplé aux moyens de différentiation (8) qui multiplie le premier signal d'erreur de sortie par un facteur inversement proportionnel à la perturbation prédéterminée destinée au facteur d'amplitude afin d'obtenir une valeur actualisée pour le facteur d'amplitude du poids de la pluralité de poids (3; 13, 15, 17, 18, 19, 20).

4. Réseau neuronal selon l'une quelconque des revendications précédentes, dans lequel chaque neurone (2; 12, 14, 16, 21) comporte un gain d'entrée associé, le réseau (1; 11) comprenant également:

des moyens d'optimisation de gain d'entrée (8, 10) pour actualiser la valeur du gain d'entrée de chaque neurone (2; 12, 14, 16, 21) dans le réseau (1; 11), les moyens d'optimisation de gain d'entrée comprenant:
des moyens d'application de gain d'entrée (10) pour appliquer temporairement une perturbation prédéterminée au gain d'entrée du neurone de la pluralité de neurones (2; 12, 14, 16, 21); et
des moyens de réception de gain d'entrée pour recevoir du port de sortie (6; 16) un troisième signal de sortie sensible au motif d'entrée prédéterminé tandis que la perturbation prédéterminée est appliquée au gain d'entrée, dans lequel les moyens de réception de gain d'entrée sont prévus de manière à obtenir du port de sortie (6) un troisième signal d'erreur en fonction d'une comparaison entre le troisième signal de sortie et le signal de sortie attendu; et dans lequel les moyens d'application de gain d'entrée (10) sont prévus pour actualiser le gain d'entrée du neurone de la pluralité de neurones (2; 12, 14, 16, 21) en fonction d'une comparaison entre les premier et troisième signaux d'erreur.

5. Réseau neuronal selon la revendication 4, dans lequel les moyens d'optimisation de gain d'entrée (8, 10) comprennent des moyens de différentiation de gain d'entrée (8) prévus de manière à fournir un second signal d'erreur de sortie qui est constitué d'une différence entre le premier signal d'erreur et le troisième signal d'erreur.

6. Réseau neuronal selon la revendication 5, dans lequel les moyens d'optimisation de gain d'entrée (8, 10) comprennent également un multiplieur de gain d'entrée (9) couplé aux moyens de différentiation de gain d'entrée (8) qui multiplie le second signal d'erreur de sortie par un facteur inversement proportionnel à la perturbation prédéterminée destinée au gain d'entrée afin d'btenir une valeur actualisée pour le gain d'entrée du neurone de la pluralité de neurones (2; 12, 14, 16, 21).

7. Réseau neuronal selon l'une quelconque des revendications précédentes, dans lequel chaque neurone comporte un gain de sortie associé, le réseau (1; 11) comprenant également:

des moyens d'optimisation de gain de sortie (8, 10) pour actualiser la valeur du gain de sortie de chaque neurone (2; 12, 14, 16, 21) dans le réseau (1; 11), les moyens d'optimisation de gain de sortie (8, 10) comprenant:
des moyens d'application de gain de sortie (10) pour appliquer temporairement une perturbation prédéterminée au gain de sortie d'un neurone de la pluralité du neurones (2; 12, 14, 16, 21);
des moyens de réception de gain de sortie (8) pour recevoir du port de sortie (6) un quatrième signal de sortie sensible au motif d'entrée prédéterminé tandis que la perturbation prédéterminée est appliquée au gain de sortie, dans lequel les moyens de réception de gain de sortie (8) sont prévus de manière à obtenir du port de sortie (6) un quatrième signal d'erreur en fonction d'une comparaison entre le quatrième signal de sortie et le signal de sortie attendu; et dans lequel les moyens d'application de gain de sortie (10) sont prévus pour actualiser le gain de sortie du neurone de la pluralité de neurones (2; 12, 14, 16, 21) en fonction d'une comparaison entre les premier et quatrième signaux d'erreur.

8. Réseau neuronal selon la revendication 7, dans lequel les moyens d'optimisation de gain de sortie (8, 10) comprennent des moyens de différentiation de gain de sortie (8) pour fournir un troisième signal d'erreur de sortie qui est constitué d'une différence entre le premier signal d'erreur et le quatrième signal d'erreur.

9. Réseau neuronal selon la revendication 8, dans lequel les moyens d'optimisation de gain de sortie (8, 10) comprennent également un multiplieur de gain de sortie (9) couplé aux moyens de différentiation de gain de sortie (8) qui multiplie le troisième signal d'erreur de sortie par un facteur inversement proportionnel à la perturbation prédéterminée destinée au gain de sortie afin d'obtenir une valeur actualisée pour le gain de sortie du neurone de la pluralité de neurones (2; 12, 14, 16, 21).

10. Réseau neuronal selon l'une quelconque des revendications précédentes, dans lequel le premier signal d'erreur est calculé comme étant proportionnel à l'erreur quadratique moyenne totale entre le premier signal de sortie et le signal de sortie attendu.

11. Procédé pour former un réseau neuronal (1; 11), dans lequel le réseau neuronal comprend une pluralité de neurones (2; 12, 14, 16, 21) comprenant chacun une ou plusieurs entrées et une sortie, la sortie étant obtenue comme une fonction de l'entrée ou des plusieurs entrées, une pluralité de poids (3; 13, 15, 17, 18, 19, 20) dont chacun est couplé à une sortie d'un neurone et à une entrée d'un autre neurone de la pluralité de neurones (2; 12, 14, 16, 21) de façon que la pluralité de poids (3; 13, 15, 17, 18, 19, 20) est en interconnexion avec la pluralité de neurones (2, 12, 14, 16, 21), dans lequel chaque poids (3; 13, 15, 17, 18, 19, 20) comporte un facteur d'amplitude avec lequel est multipliée une sortie de celui correspondant des neurones (2; 12, 14, 16, 21); et dans lequel le réseau neuronal (1; 11) comprend également un port d'entrée (5) comprenant des entrées pour un premier groupe (12) de la pluralité de neurones (2; 12, 14, 16, 21), et un port de sortie (6) comprenant des sorties d'un second groupe (16) de la pluralité de neurones (2; 12, 14, 16, 21), le procédé comprenant les étapes consistant à:

   (a) fournir en entrée un motif d'entrée prédéterminé au port d'entrée (5);
   (b) obtenir du port de sortie (6) un premier signal de sortie sensible au motif d'entrée prédéterminé;
   (c) appliquer temporairement une perturbation prédéterminée au facteur d'amplitude du poids de la pluralité de poids (3; 13, 15, 17, 18, 19, 20);
   (d) obtenir du port de sortie (6) un second signal de sortie sensible au motif d'entrée prédéterminé tandis que la perturbation prédéterminée est appliquée au facteur d'amplitude;
   (e) fournir un premier signal d'erreur en fonction d'une comparaison entre le premier signal de sortie et un signal de sortie attendu pour le motif d'entrée prédéterminé;
   (f) fournir un second signal d'erreur en fonction d'une comparaison entre le second signal de sortie et le signal de sortie attendu; et
   (g) actualiser le facteur d'amplitude du poids de ladite pluralité de poids (3; 13, 15, 17, 18, 19, 20) en fonction d'une comparaison entre les premier et second signaux d'erreur.

12. Procédé selon la revendication 11, dans lequel les étapes (c), (d), (e), (f) et (g) sont répétées pour chaque neurone de la pluralité de neurones (2; 12, 14, 16, 21).

13. Procédé selon la revendication 11 ou 12, dans lequel chaque neurone (2; 12, 14, 16, 21) comporte un gain d'entrée associé, la sortie étant obtenue en appliquant une fonction à l'entrée ou aux plusieurs entrées multipliées par le gain d'entrée, le procédé comprenant également les étapes consistant à:

   (h) appliquer une perturbation prédéterminée au gain d'entrée d'un neurone de la pluralité de neurones (2; 12, 14, 16, 21);
   (i) obtenir du port de sortie (6) un troisième signal de sortie sensible au motif d'entrée prédéterminé tandis que la perturbation prédéterminée est appliquée au gain d'entrée;
   (j) fournir un troisième signal d'erreur en fonction d'une comparaison entre le troisième signal de sortie et le signal de sortie attendu; et
   (k) actualiser le gain d'entrée du neurone de la pluralité de neurones (2; 12, 14, 16, 21) en fonction d'une comparaison entre les premier et troisième signaux d'erreur.

14. Procédé selon la revendication 13, dans lequel les étapes (h), (i), (j) et (k) sont répétées pour chaque neurone de la pluralité de neurones (2; 12, 14, 16, 21).

15. Procédé selon l'une quelconque des revendications 11 à 14, dans lequel chaque neurone (2; 12, 14, 16, 21) comporte un gain de sortie associé, la sortie du neurone étant le gain de sortie multiplié par une fonction de l'entrée ou des plusieurs entrées, le procédé comprenant également les étapes consistant à:

(l) appliquer une perturbation prédéterminée au gain de sortie d'un neurone de la pluralité de neurones (2; 12, 14, 16, 21);
(m) obtenir du port de sortie (6) un quatrième signal de sortie sensible au motif d'entrée prédéterminé tandis que la perturbation prédéterminée est appliquée au gain de sortie;
(n) fournir un quatrième signal d'erreur en fonction d'une comparaison entre le quatrième signal de sortie et le signal de sortie attendu; et
(o) actualiser le gain de sortie du neurone de la pluralité de neurones (2, 12, 14; 16, 21) en fonction d'une comparaison entre les premier et quatrième signaux d'erreur.

16. Procédé selon la revendication 15, dans lequel les étapes (l), (m), (n) et (o) sont répétées pour chaque neurone de la pluralité de neurones (2; 12, 14, 16, 21).

17. Procédé selon l'une quelconque des revendications 11 à 16, dans lequel l'étape (e) comprend le calcul du premier signal d'erreur comme étant proportionnel à l'erreur quadratique moyenne totale entre le premier signal de sortie et le signal de sortie attendu.

FIG. 1

FIG. 2